# EUROPEAN PATENT APPLICATION

(11) **EP 2 413 128 A1**
(43) Date of publication of application: **01.02.2012**
(21) Application number: 10171508.4
(22) Date of filing: 30.07.2010
(51) Int. Cl.: G01N 21/05, G01N 21/55, G01N 29/02, G01N 29/22, B01L 3/00

(54) **Improved microfluidic sensor units to detect the presence of an analyte in a sample-fluid**

(71) Applicant: SAW instruments GmbH, 53177 Bonn (DE)
(72) Inventor: Perpeet, Markus, 53177 Bonn (DE); Koch, Michael, 53177 Bonn (DE); Götz, Ulrich, 53177 Bonn (DE)
(74) Representative: Molnia, David

(57) **Abstract**

The present invention relates to improved sensor units, apparatuses that include and components of said sensor units. Further, the present invention also relates to methods, uses and processes involving the foregoing aspects. The improved sensor units may, in particular, include a surface acoustic wave (SAW) sensor region. The sensor units of the invention have improved characteristics over prior art sensor units, for example a reduced propensity for bubbles or other obstacles to be retained within the sensor unit, and in particular on the sensor region, thereby providing sensor units that show improved performance such as in terms of sensitivity, accuracy, stability, reliability and/or reproducibility in detection assays.

## Description

The present invention relates to improved sensor units, apparatuses that include and components of said sensor units. Further, the present invention also relates to methods, uses and processes involving the foregoing. The improved sensor units may, in particular, include a surface acoustic wave (SAW) sensor region. The sensor units of the invention have improved characteristics over prior art sensor units, for example a reduced propensity for bubbles or other obstacles to be retained within the sensor unit, and in particular on the sensor region; thereby providing sensor units that show improved performance such as in terms of sensitivity, accuracy, stability, reliability and/or reproducibility in detection assays.

Chemical and biological testing is commonly used to test for the presence or absence of chemical or biological analytes. Testing for the presence of chemical or biological analytes in blood, food or other materials can be performed to ensure safety or to facilitate diagnosis of medical conditions. For example, testing is used to identify chemicals, bacteria or other analytes in blood samples taken from medical patients, laboratory samples developed for experimental purposes, food samples, or the like. In addition, chemical and biological testing is also used to test for medical conditions such as pregnancy, diabetes, and a wide variety of other conditions that may affect the patient's chemistry or biology. In another application, testing for binding and quantifying amounts or binding affinities of chemical or biological analytes is becoming increasingly of interest and routinely conducted within research laboratories. For example, an understanding of the binding properties of a drug candidate to its molecular target, or a therapeutic antibody to its antigen, can greatly enhance the understanding of the mechanism of action of therapeutic agents and/or their side-effects. In yet another application, testing for analytes such as drugs or explosives may be conducted for the purposes of security and law enforcement. In this specialised application, samples may be collected from sweat, breath or surface swabs, generating a particularly demanding requirement for sensitivity, such as described in Frisk et al (Lab Chip 8: 1504, 2006).

Unlike classical assays such as tube and slide coagulase tests or immunoassays, the sensor units of the present invention employ an integrated sensor. As used herein "sensor" refers to a device that detects a change in at least one physical property and produces a signal, or induces a change in a signal, in response to the detectable change. The manner in which the sensor detects a change may include, e.g., acousto-mechanical changes, electrochemical changes, optical changes, electro-optical changes, etc. For example, acousto-mechanical sensors can utilise resonant frequency, phase-shifts, piezoelectric properties, etc, and electrochemical sensors utilise potentiometric and amperometric measurements, whereas optical sensors may utilise absorbance, fluorescence, luminescence and evanescent waves.

One type of acousto-mechanical sensor that has been developed for chemical or biological sensing capabilities is a surface acoustic wave (SAW) sensor. One example of a SAW is a Love mode shear-horizontal surface acoustic wave (SH-SAW) sensor. A SH-SAW sensor includes four main components: 1) a piezoelectric substrate; 2) an input inter-digitated transducer (IDT) on the substrate, which is used to excite an acoustic wave based on the piezoelectric effect; 3) an output IDT on the substrate, which receives the transmitted acoustic wave and generates electrical output by exploiting the piezoelectric effect; and 4) a wave-guide layer over the IDT's, which confines the wave to the guiding layer, thereby transmitting the wave from the input IDT to the output IDT. The presence of one or more materials on the surface of the SH-SAW affects wave propagation through the waveguide layer, which facilitates detection of the given analyte. For example the SAW sensor may be of the layered type where a biological sensitive layer is located on the surface of the SAW device. A gold film or silicon dioxide layer may be deposited on the surface. For example, gold interacts with high affinity to proteins and it can be used with specific antibodies for antigen detection. In operation, a SAW sensor is electrically coupled to a circuit, which sends signals to, and receives signals from, the SAW sensor. Typically, the circuit incudes a high-frequency signal generator.

There is an increasing trend to reduce the size of such sensors, primarily driven by a need to reduce the amount of fluid, typically liquids, that comprise the samples or reagents needed for the detection of a given analyte. Such sensor systems typically work with quantities of fluids in the micro to nano-litre range. These small volumes of fluid need to be introduced into the sensor unit and provided to a sensing surface, and in particular to one or more specific sensor regions, so the fluid is exposed to the sample or reagent in order for the sensor to detect the presence of an analyte in the sample. Hence, these systems generally consist of microstructured closed channels, which transport fluid to and across one or more sensor regions. The movement of the fluid, in particular liquids, can be caused by a variety of processes, including: mechanical micropumps, electricalkinetic methods, electrosmosis, hydrostatic pressure differentials, capillary forces, centrifugal forces, so called "Electrowetting" ("Creating, Transporting, Cutting, and Merging liquid Droplets by Electrowetting Based Actuation for digital Microfluidic Circuits"; Cho S.K., Moon H. Kim C.J.; Journal of Microelectromechanical Systems; 12(1): 70-80, 2003) or also by surface acoustic wave techniques adapted to transport liquids on surfaces, like for example in "Flatland fluidics" (Wixforth A., Scriba J. and Gauer C. in mstnews 5/02, side 42-43).

The channels construed within such micro-analytic devices are often less than a few millimetres across or deep, sometimes less, including only hundreds of micrometers. However, such channels are usually very prolonged relative to their cross-section, so that the surface area of the boundaries of the channels in contact with the fluid is relatively large in comparison to the volume of liquid they contain. Hence, there is significant potential for surface tension or friction effects at the boundaries of the channels. Without being bound by theory, it is believed that such effects are responsible for the retention of obstacles such as bubbles in the channels; a common problem for virtually all kinds of "lab on a chip" systems.

As used herein "obstacle" refers to any undesired or unexpected composition that hinders the flow of a fluid, such as a liquid, particularly within a sensor unit. An obstacle may be a solid particle, such as dust, a cell or cell-clump, a fragment of fabrication material, or a fibre such as a hair or a fibre from a textile. Equally, an obstacle may be a precipitate or crystal that arises out of the fluid itself. Alternatively, an obstacle may be a gas, particularly a bubble of air or another gas or vapour, or more generally a void formed from the absence of liquid. An obstacle may also be another liquid that is the same or different to the first liquid. Such kinds of liquid obstacles may arise when different liquids having different densities or hydrophobicity such as an oil and an aqueous solution, are used within a channel. A liquid obstacle may also be formed from a drop of a liquid having the same density and hydrophobicity yet having a different surface tension to another liquid. An obstacle may arise from a source intrinsic to the sensor unit or channel, such as a fragment that dislodges from the walls of the channel, or a contaminant or remainder of the material used to construct the channel. Alternatively, an obstacle may arise from a source extrinsic to the sensor unit or channel. That is, it is introduced into the system from being present within the fluid itself. A particular form of obstacle, such as a bubble or dust, may arise either intrinsically or externally. For example, a bubble may already be present in the fluid as it is introduced into the channel, or may be formed only once the fluid has been introduced into the channel. This may occur due to gases dissolved within a liquid coming out of solution, or from evaporation of the liquid itself. For example, bubbles may be formed from spontaneous degassing of a liquid, especially if a liquid reservoir is held at a relatively high temperature compared to a cooler sensor unit, which will then reduce the gas-carrying capacity of the liquid as it is cooled within the sensor unit.

If an obstacle, such as a void like a bubble, is retained within a sensor unit, it can significantly impair its performance such as the functioning of the detection assay, especially if quantitative detection is desired. This sensitivity to obstacles such as bubbles is common to virtually all sensor technologies used to detect the presence of chemical or biological analytes. However, by way of example, and because a SAW sensor is highly sensitive to changes in mass at its sensing surface, an obstacle retained on the surface of the SAW sensor unit that is not desired to be detected, whether it is a solid obstacle like a dust particle or a gaseous obstacle like a bubble, will affect the surface-mass and hence could significantly affect the propagation of the acoustic wave through the waveguide layer: leading to incorrect or undesired signals. An obstacle, like a bubble, may also be retained elsewhere in the fluidic-flow features of a SAW sensor unit, such as in microfluidic channels, and yet still have a detrimental effect on the correct or optimal performance of said sensor unit. For example, a bubble retained in the fluidic system either before or after the sensor region will restrict the cross-section of a channel and with certain fluid-flow systems may significantly reduce the flow-rate of fluid through said channel, and hence across the surface of the sensor region. Such a reduction in flow-rate, especially if the obstacle completely restricts the channel and hence blocks the flow of fluid, will have significant effects on the desired or expected performance of the SAW sensor region, and can manifest itself with effects such as reduced sensitivity, stability, accuracy, reliability and or reproducibility of the detection assay. Analogous problems are also seen if an obstacle is retained in micro-fluidic "lab on a chip" sensor units based on other detection technologies, particularly those that also utilise a sensing surface such as surface plasmon resonance (SPR) -based sensor units.

A particular manner in which bubbles or other voids can be formed within channels is when a liquid is first introduced to an empty, or substantially empty, channel. As a liquid is introduced into a sensor unit, then bubbles may form, particularly if the flow rate or pattern of the liquid into or through the channel is not controlled. Hence, it is known in the art that it is advantageous to control the progression of the leading edge of a bolus of fluid (the "flow-front") as it moves across the surface of a senor region in a sensor unit. By control of flow-front progression, the sensor region may be wetted out by the sample fluid, ie bubbles or voids in the fluid that could occupy a portion of the senor regions may be reduced or eliminated. However, control of the fluid-front may be difficult if the sensor region of the sensing surface is generally flat, orientated horizontally and/or unstructured, such as with SAW sensor regions.

WO2005/064349 describes structural modification to the surface that opposes that of a SAW sensor, such that the progression of the fluid-front through the channel so formed is controlled as it passes across the surface of the sensor region, reducing the generation and hence retention of voids, in particular bubbles. The modifications described in WO2005/064349 are generally adapted to hinder, slow or to direct the fluid flow in controlled manner, such that the progression of the fluid-front does not progress quickly at one point relative to another, and hence form a bubble or other voids. Such "microstructured" modifications as described therein however, require complex moulding or machining of the channels within the sensor unit.

US4735906 discloses, in one specific embodiment, a pair of piezoelectric acoustic wave devices adapted for use in microgravimetric immunoassays, where such devices are held in a vertical position. The sensor unit disclosed by this embodiment has a fluid inlet port that is lower than the fluid outlet port. Such a detector however, includes very large SAW devices (1 in. x 0.5 in.) each containing only a single sensor region, as well as fluidic channels and a cylindrical sample chamber that are not "micro-fluidic". Hence the sensor unit disclosed therein is not subjected to the significant problem of bubble, or other obstacle, retention within the sensor unit or on the surface of the two large sensor regions.

WO2006/010206, in one specific embodiment, also discloses a SAW-based sensor unit that is held in a vertical position. Further, such sensor unit incorporates a serpentine microfluidic channel having sub millimetre cross-section dimensions. The sensor unit of this citation discloses a sample reservoir that is higher than the waste reservoir so as to increase the head of the reservoir, and hence ensures a faster fluid flow rate through the sensor unit - which could only increase the risk of bubble formation. The purpose of the serpentine channel described therein is to hold solution that is considered "blank" compared to the sample fluid be analysed, where it delays the introduction of the sample fluid into the detection area by 45 seconds to 2 minutes.

WO2009/153189 discloses a sensor unit that is held horizontally and that comprises a flexible covering potion of a sensing surface based on a SAW sensor, where the flexible covering has constructed within it a channel structure having a meander shape. This meander-shaped geometry is described therein as providing a good fluid-dynamic, and is used to provide the fluid sequentially over a number of separate sensor regions of a multi-channel sensor unit based on SAW sensors. Having a height of between 0.1 and 5 mm, such a microchannel was described in this citation as contributing to a significant reduction of air-bubbles in the fluid flow.

Despite all these developments, sensor units are often still subject to undesired functional and/or performance disturbances or perturbations, including those brought about by obstacles such as bubbles, even though the frequency of the retention of such obstacles may be reduced by one or other prior-art adaptation. In one regard therefore, it is desirable to provide an improved senor unit with reduced propensity to suffer such functional and/or performance disturbances or perturbation, for example sensor units from which it is possible to dislodge any retained obstacle, such as a bubble, while the sensor unit is still in operation, for example without having to replace, shut down or otherwise dismantle a senor unit, particularly without having to stop the ongoing detection assay, or for a sensor unit that may be expensive or complicated, may be incorporated in a complicated detection assay or may contain important or precious sample fluid within it. Furthermore, in another regard it is therefore desirable to develop new sensor units, such as those based on SAW sensor regions, that show improved performance such as in terms of sensitivity, accuracy, stability, reliability and/or reproducibility in detection assays, particularly in respect of a reduction in their propensity to retain obstacles, such as bubbles, within said sensor unit, the channels therein or on the surface of the sensor region that form the technological basis of the detection.

### SUMMARY

In a first aspect, the invention is directed to **a sensor unit** comprising: (i) a sensing surface having at least one sensor region adapted to detect the presence of at least one analyte in a sample-fluid; (ii) at least one fluid-port for providing said sample-fluid to, and at least one fluid-port for removing said sample fluid from, said sensing surface; and (iii) at least one channel to transport said sample-fluid from one fluid-port, across at least one sensor region, to another fluid-port; wherein, said sensor unit is **characterised by:**

(a) Said sensing surface, when mounted for operation, is orientated at an angle between, but not equal to, horizontal and vertical, and with one fluid-port located above the other fluid-port;

(b) Said channel has a cross-section with a vertical dimension that is larger at one position across the channel than at another; and/or

(c) That portion of the sensor unit that covers said sensing surface is sufficiently transparent so as to visually detect an obstacle retained in the sensor unit during normal operation, and wherein the side-walls of said channel in contact with the sensing surface are constructed from a deformable material.

In one other aspect, the invention relates to a novel intermediary subunit of the inventive sensor units, herein described as the second operative subunit, and in another aspect the invention relates to a novel component of the inventive sensor units, namely **a fluid flow-cell** for a sensor unit of the invention, in each case as described herein.

One further aspect of the invention relates to **an apparatus** for detecting the presence of at least one analyte in a sample-fluid, said apparatus characterised by comprising at least one sensor unit of the invention, and further comprising at least one of:

(a) Electronic control means, preferably comprising a high-frequency signal generator;

(b) Sampling means to sample a liquid from at least one sample container, or to introduce at least one liquid sample into said sensor unit, preferably an autosampler and a syringe-pump; and or

(c) A computer readable medium including computer software adapted to control said apparatus.

Another further aspect of the invention relates to **a method** of reducing the retention of obstacles, such as bubbles, in a sensor unit, such as in a channel or on a sensing surface preferably on a sensor region of a sensor unit of the invention or the apparatus of the invention by dislodging an obstacle, such as a bubble, retained therein or thereon, wherein that portion of the sensor unit that covers the sensing surface is sufficiently transparent so as to visually detect any bubbles retained in said sensor unit or channel or on said sensing surface, preferably on said sensor region, during normal operation of said sensor unit or said apparatus, and wherein the side-walls of said channel in contact with the sensing surface are constructed from a deformable material, , said method **comprising the steps of:**

(a) Providing said sensor unit or said apparatus and supplying it with a flowing sample-fluid, preferably a sample-liquid;

(b) Visually inspecting if any obstacle, such as a bubble, is retained in said sensor unit or channel or on said sensing surface, preferably on said sensor region; and

(c) Deforming the cross-sectional shape of the channel, preferably wherein said channel has a house-shaped cross-section, such that the retained obstacle is dislodged from said sensor unit or channel or from said sensing surface, preferably from said sensor region.

A certain other aspect of the invention relates to a **use of a sensor unit** of the invention or **use of an apparatus** of the invention to detect the presence of at least one analyte in a sample-fluid, such as a sample-liquid, and yet other certain aspects of the invention are also disclosed herein.

### BRIEF DESCRIPTION OF DRAWINGS

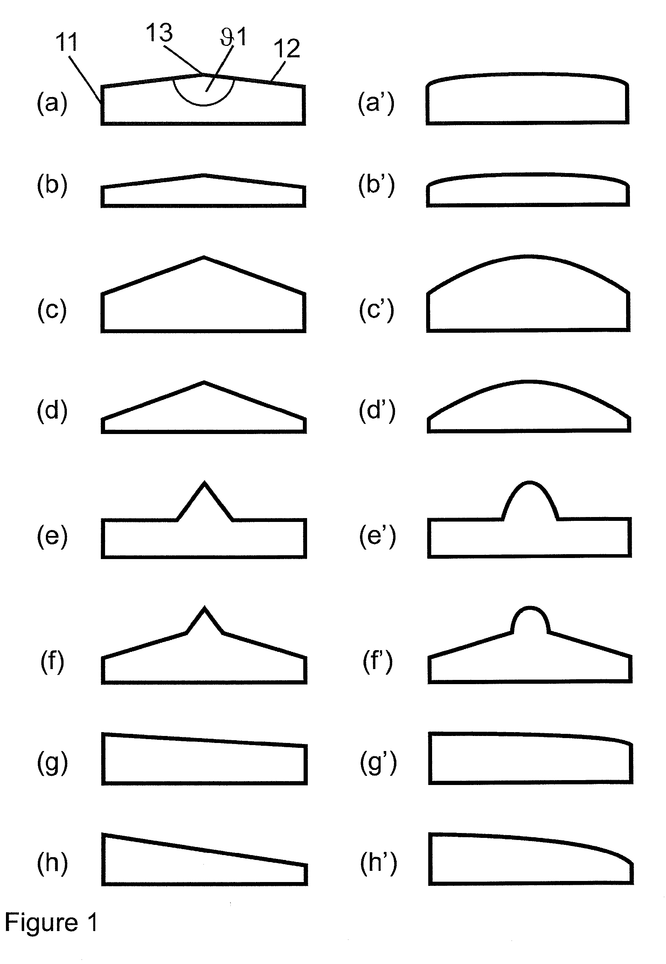

FIGURE 1 depicts various shapes that schematically represent certain possible cross-sections of the channel that may be comprised within a sensor unit of the invention.

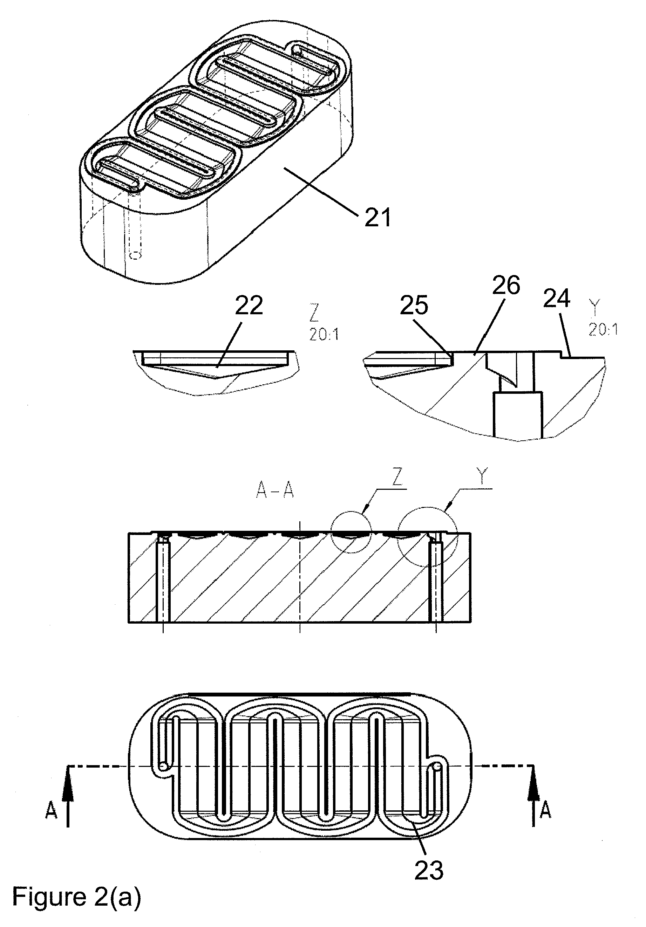

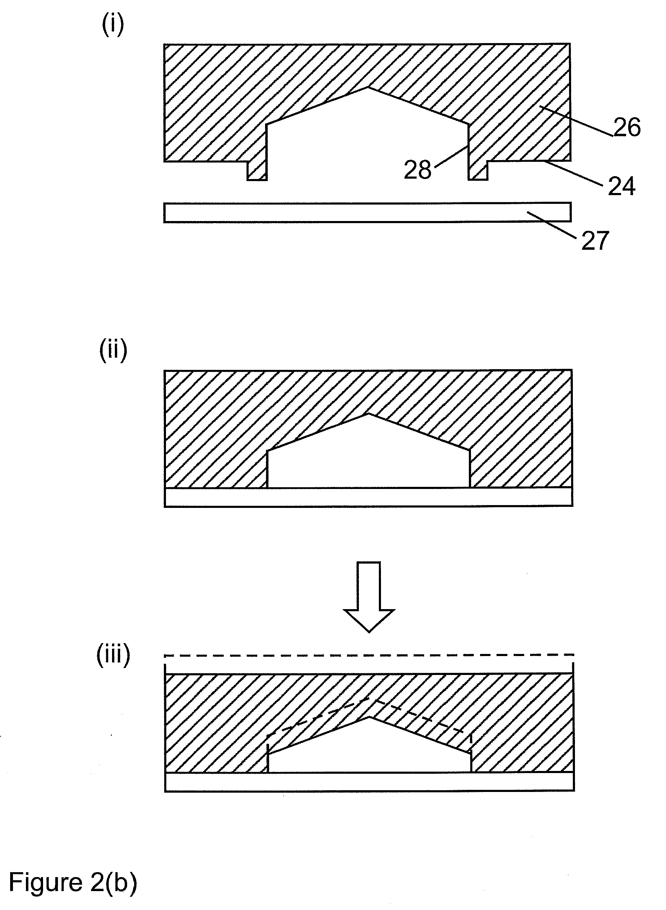

FIGURE 2(a) depicts one possible representative design of a fluid flow-cell (21) of the invention, for use in a sensor unit of the invention. This particular embodiment shows a flow-cell made from silicone-rubber, a deformable material, and has a roof-shaped channel (22) formed in a meander shape that includes six loops (23), together with a stop-surface (24). This stop-surface provides a robust limit to the compression of the side walls as the channel is formed by sealing the side-walls (25), comprising a lip (26), made from deformable material onto the sensing surface (not shown). FIGURE 2(b) depicts a series of sketches as a channel being formed by contact of a schematic fluid-flow-cell (26) with a sensing surface (27) such that the side-walls (28) are compressed up to the stop-surface (24) to form a fluid-tight seal. The last sketch shows the deformation of the channel upon application of additional pressure (for example by the user) as represented by the arrow. In this case, the approximate dimensions of the flow cell shown in FIGURE 2(a) are 20 mm in length, 8.5 mm wide, 5 mm deep and with a roof-shaped channel that is 2.1 mm in width, and when appropriately compressed up to the stop-surface (such as in FIGURE 2(b)(ii)) is about 0.3 mm above the sensing surface at its highest point.

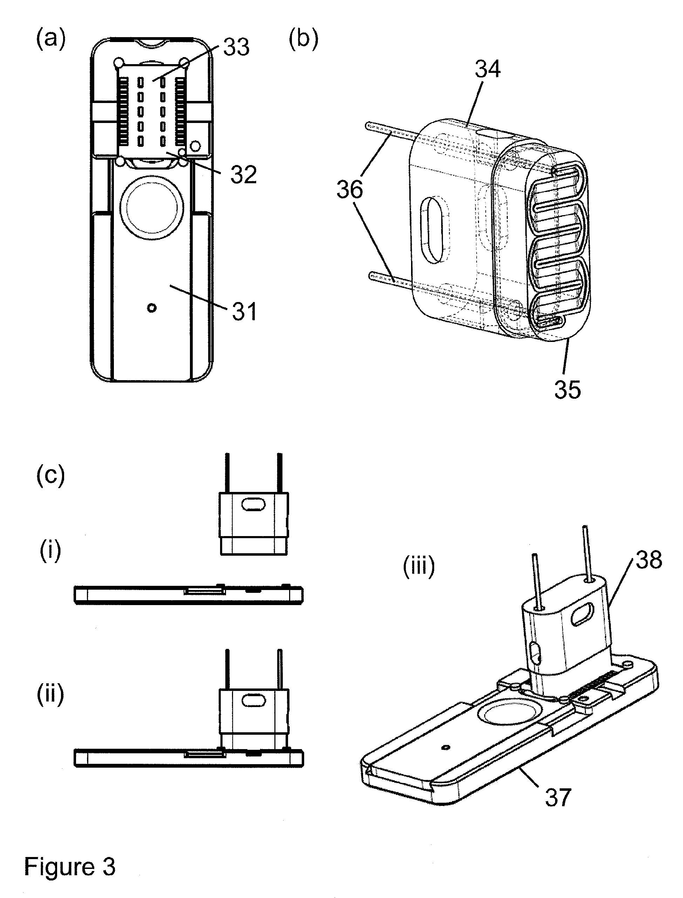

FIGURE 3(a) depicts one representative design of a first operative subunit (31) of the inventive sensor unit, this depicted first operative unit comprises five discrete SAW sensor regions. The overall size of this first operative subunit is about 70 mm by 25 mm by 5 mm, the sensing surface (32) is about 19 mm by 14 mm, and the size of each SAW sensor regions (33) is about 1.7 x 4 mm. FIGURE 3(b) depicts one representative design of a second operative subunit (34) of the inventive sensor unit, this depicted second operative unit being generally transparent, and comprising a fluid flow-cell (35) with a preferred cross-sectional shape together with two fluid flow lines (36). FIGURE 3(c) depicts a series of sketches how, by the use of a locating means (in this case an operative lid, not shown), the sensor unit may be formed from the first (37) and second operative units (38). Correct functioning of the positioning means and formation of a sensor unit is sensed by the sensing means shown, in this case a position-sensing micro-switch (not shown).

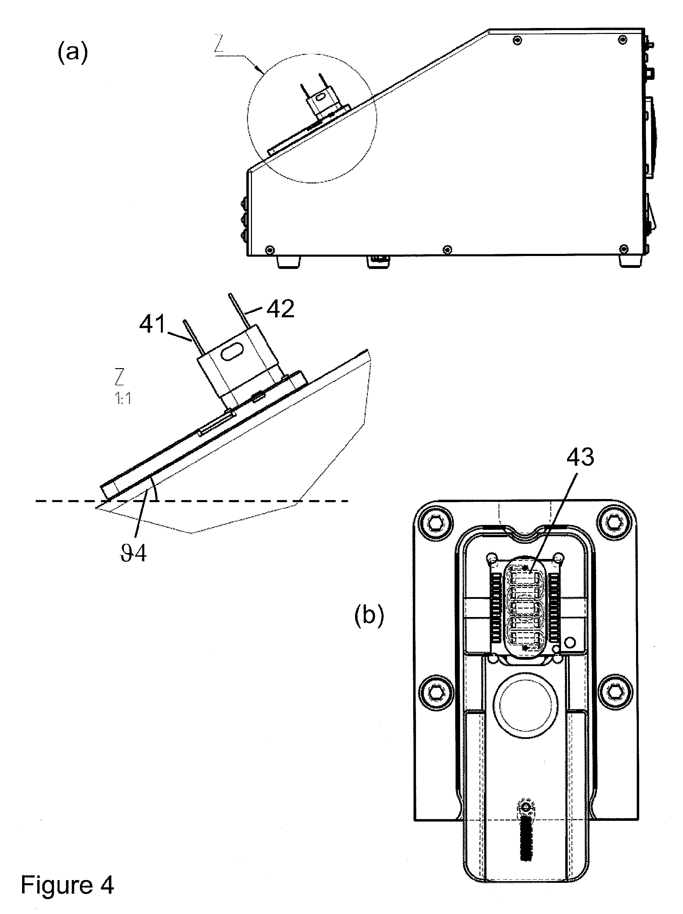

FIGURE 4(a) depicts a cross-section view of one representative orientation of a sensor unit of the invention, in this case where the sensing surface is held by a holder at an angle (θ₄) of about thirty degrees (30°) to horizontal, and with the fluid port for fluid input (41) being positioned lower than the fluid port for fluid output (42). FIGURE 4(b) provides a second view, perpendicular to the sensing surface, of the same angled sensor unit. In this case, the channel and the sensing surface are visible (43) through that portion of the sensor unit that covers the sensing surface as this portion of the sensor unit is made from PMMA and the fluid flow-cell made from silicone-rubber, both transparent materials.

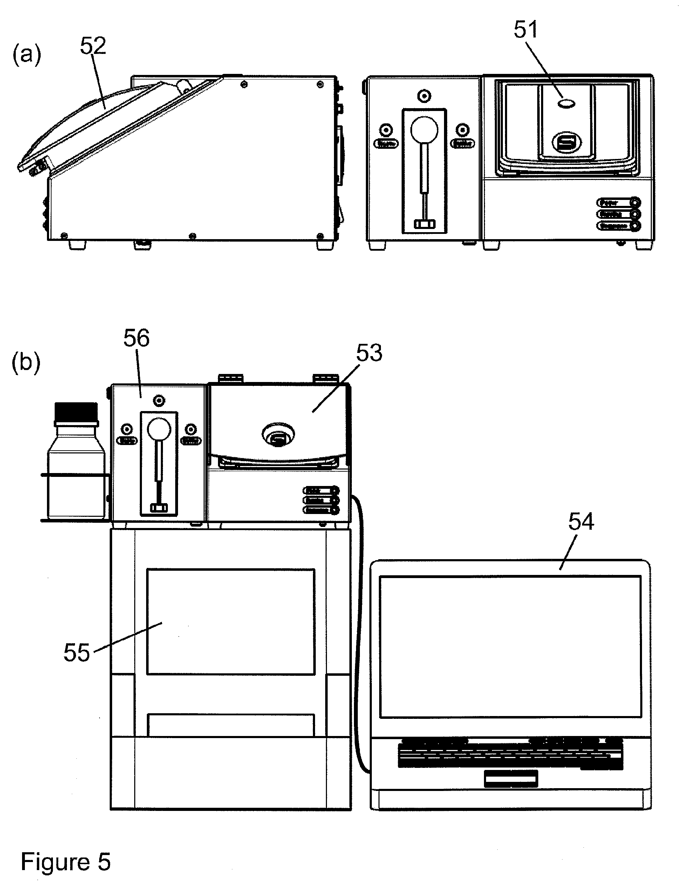

FIGURE 5(a) depicts side and front views of one representative design of an apparatus of the invention that includes an inventive sensor unit. In this case, the representative apparatus further comprises a window (51) in an operative lid (52) of the apparatus so that the operator may inspect and visually detect any obstacles in the channel of the sensor unit or on a sensor region during normal operation of the apparatus. The depicted representative apparatus is additionally provided with LED-based illumination means (not shown) that provide illumination through the transparent upper portion and into the sensor unit so that any obstacles in the sensor unit may be visually detected more readily, as well as also containing an electronic circuit board (not shown) that includes a high-frequency signal generator used to stimulate the SAW sensor regions. FIGURE 5(b) shows the outer view of such an apparatus (53) (which now shows a transparent non-operative aesthetic cover) together with an external control computer (54), liquid autosampler (55) and syringe-pump units (56).

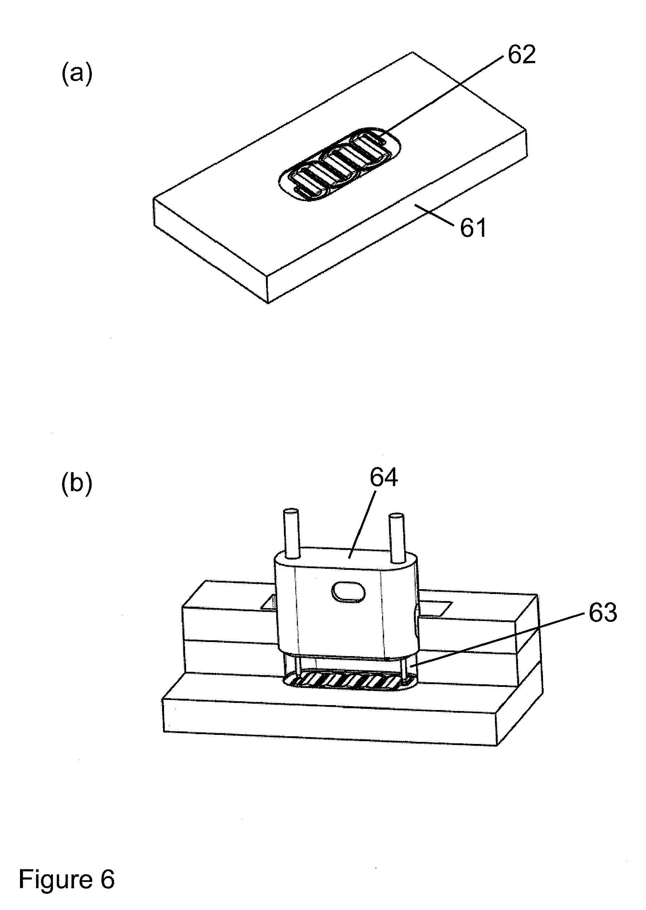

FIGURE 6(a) depicts a view of one representative design of a mould (61) useful to manufacture a fluid flow-cell of the invention. The mould includes a shape (62) complementary to the shape of a fluid flow-cell of the invention. FIGURE 6(b) depicts another mould that includes an opening (63) adapted to receive the remainder of that portion of the sensor unit that covers the sensing surface. Said remaining portion (64) is placed onto said solidifying polymer so as to form a fluid-flow-cell comprised on the second operative subunit of the invention.

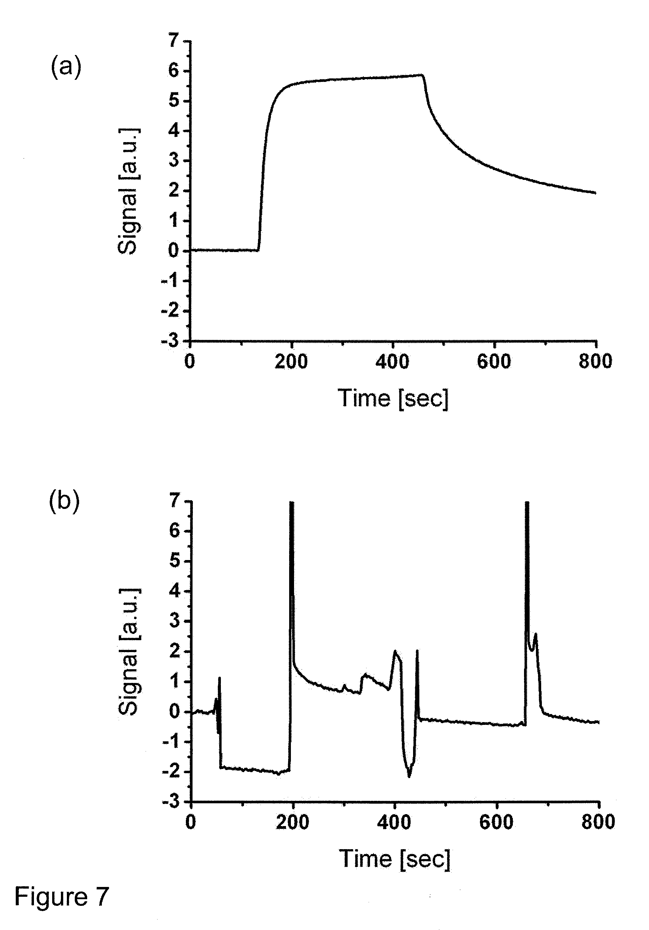

FIGURE 7 shows the detection signal obtained from one of the five SAW sensor regions during EXAMPLE 1: FIGURE 7(a) showing the signal before the introduction of at least one bubble into the sensor unit; and FIGURE 7(b) shows the signal from the same SAW sensor region after introduction of at least one bubble into the sensor unit.

### DETAILED DESCRIPTION

In a first aspect, the invention is directed to a sensor unit comprising: (i) a sensing surface having at least one sensor region adapted to detect the presence of at least one analyte in a sample-fluid; (ii) at least one fluid-port for providing said sample-fluid to, and at least one fluid-port for removing said sample fluid from, said sensing surface; and (iii) at least one channel to transport said sample-fluid from one fluid-port, across at least one sensor region, to another fluid-port; wherein, said sensor unit is characterised by:

(a) Said sensing surface, when mounted for operation, is orientated at an angle between, but not equal to, horizontal and vertical, and with one fluid-port located above the other fluid-port;

(b) Said channel has a cross-section with a vertical dimension that is larger at one position across the channel than at another; and/or

(c) That portion of the sensor unit that covers said sensing surface is sufficiently transparent so as to visually detect an obstacle retained in the sensor unit during normal operation, and wherein the side-walls of said channel in contact with the sensing surface are constructed from a deformable material.

In a preferred embodiment, said channel has a cross-section with a vertical dimension that is larger at one position across the channel than at another.

In another preferred embodiment of the invention, the sample-fluid is a liquid, such as an aqueous liquid. In an alternative embodiment, the sample-fluid is a non-liquid fluid such as a gas.

The fluid-ports that "provide" or "remove" the sample-fluid, preferably a sample-liquid, may passively or actively supply or drain the sample-fluid to or from, respectively, the sensing surface. For example, in certain embodiments the sample-fluid can be actively pumped, such as by a syringe pump, into and/or out of the fluid-ports, and hence across the sensing surface. Preferably the sample-fluid, particularly when a sample-liquid, is actively pumped into the fluid-port that provides the sample-fluid to the sensing surface and the fluid-port that removes the sample-fluid acts as a passive waste fluid-port. Alternatively, the fluid-ports can passively provide and remove the sample-fluid, particularly when a sample-liquid. This may be achieved by the use of capillary action, such as through use of an absorbent material in association with the fluid-port that removes the sample-liquid, or also by the application of a syphon principle with the final outlet of the removing fluid-port positioned substantially lower than the inlet of the providing fluid-port, such that an appropriate head of sample-liquid is created. Also, it will be appreciated that a pressure difference, such as the use of a pressurised gas sample, can be used to provide sample-fluid to the sensing surface.

The sample-fluid is provided by one fluid-port, passes through at least one channel and is removed by the other fluid-port such that the sample-fluid passes across the sensing surface, including across at least one sensor region. This enables the sample-fluid to come into contact with the sensor region that has been adapted to detect the presence of at least one analyte in the sample-fluid. In those embodiments of the invention that have more than one sensor region, certain of such embodiments may have only one channel that transports the same sample-fluid across all such sensor regions. However, alternative embodiments of the invention may include more than one channel, where only certain of such multiple channels transport sample-fluid across only certain of such multiple sensor regions. For example, one channel may transport a sample-fluid across a sub-set of (for example one or two) sensor regions, and another channel may transport a sample-fluid across another such sub-set of sensor regions. In certain such embodiments, the invention comprises a separate channel for each sensor region; for example, four channels, with one channel for each one of four sensor regions, preferably adapted that each such channel can transport a different sample-fluid.

In the first possible characterising feature (a) of certain embodiments of the invention, the sensing surface, when mounted for operation, is orientated at an angle between, but not equal to, horizontal and vertical; preferably wherein said sensing surface, when mounted for operation, is orientated at an angle selected from the group of: between about 10 and about 80 degrees to horizontal; between about 15 and 60 degrees; between about 20 and 40 degrees to horizontal; and, most preferably, about 25, 30 or 35 degrees to horizontal, preferably wherein the fluid-port for providing said sample-fluid is located lower than the fluid-port for removing said sample-fluid from the sensing surface, such that the direction of flow of the sample-fluid is generally upwards. In certain such embodiments, it is preferred that the sensing surface, when mounted for operation, is orientated such that said sensor region is facing generally upwards.

The sensing surface, when mounted for operation, may be orientated at the non-vertical and non-horizontal angle, such as between about 10 and about 80 degrees to horizontal, by appropriately orientating the sensor unit in which the sensing surface is included, for example by positioning the sensor unit at such an angle. An example of such an orientation embodiment is shown by FIGURE 4(a). In alternative embodiments, the sensing surface may be orientated at such a non-vertical and non-horizontal angle by positioning the sensing surface at such the desired angle within the sensor unit; and the sensor unit may itself be held at a vertical or horizontal angle. The skilled person will recognise that all suitable orientations of the sensing surface can be provided by variants of one, other or combinations of both such embodiments.

Prior art sensing surfaces, for example those disclosed in US4735906, WO2009/153189 and WO2006/010206, have sensing surfaces that are held horizontally or vertically. Another Prior art sensor unit, the K5 of Biosenor GmbH uses a sensing surface held at an non-vertical and non-horizontal angle, but with fluid ports at the same height such that fluid flow was generally horizontal and not generally vertically as is achieved by having one fluid port-positioned above, preferably substantially above, than the other fluid-port such as in this embodiment of the invention. In a preferred embodiment, the fluid-port for providing said sample-fluid is located lower than the fluid-port for removing said sample-fluid from the sensing surface, such that the direction of flow of the sample-fluid is generally upwards. Such a direction of flow for the sample-fluid is preferred, particularly in a combined embodiment where the sensing surface is held at an angle of between about 10 and about 80 degrees to horizontal, the sensing surface is, when mounted for operation, orientated such that said sensor region is facing generally upwards and/or when the obstacle is a bubble in a sample-liquid. Without being bound by theory, it is believed that any obstacle, such as a bubble, which has a lower density than the sample-fluid, when exposed to a generally upward flow of the sample-fluid across a sloping sensor region that is facing generally upwards, is more readily removed by an "up and away" movement from the upwards-facing sensor region surface without being dragged across or sticking to said sensing surface. This combination, in particular, is surprisingly found to be most effective at preventing bubbles from being retained on the sensing surface and hence causing perturbations to the detection assay. However, it will be apparent to the skilled person upon disclosure of this invention that an alternative embodiment, where the sensing surface is, when mounted for operation, orientated such that said sensor region is facing generally downward, and/or where the flow of fluid-flow is generally downwards, can be advantageous under certain circumstances, for example where the obstacle is more dense than the sample-fluid, such as when the obstacle is a solid particle including dust, a fibre or a precipitate, and/or where the sample-fluid is a gas.

Sensing surfaces orientated vertically (as opposed to in a sloping orientation as in the instant invention) and having a generally upwards fluid-flow, can suffer from obstacle-related perturbations. For example, a bubble may still be retained on the surface of a vertical sensing surface as surface tension can be sufficient to stick the bubble to the surface despite the fluid-flow, or the bubble may merely (slowly) "roll" across the surface and not be cleanly lifted off the surface as in the case of a sloping surface facing generally upwards. Hence, the combination of a non-vertical or non-horizontal and generally upward-facing sensing surface, combined with a generally upwards fluid-flow is particularly effective at reducing obstacle retention on sensing surfaces and hence is an especially preferred embodiment, particularly when the sample-fluid is a sample-liquid and the obstacle is a bubble. Another advantage of holding the sensing surface at a non-vertical position is that it may be held in position by a simple passive holder, such as a recess. If the sensing surface were to be held in a vertical position, then specific retaining means such as clips or fasteners are needed to hold the holder so that it does not fall out of position. Hence, a sensor unit of a simple, and hence more reliable and robust design, is provided by this embodiment of the invention. Finally, given that such sensor units are commonly used in a bench-top laboratory setting, a sensing surface held at an angle between, but not equal to, horizontal and vertical, particularly when the senor regions are facing generally upwards, is advantageous if the user is to easily visually inspect the sensor unit for the presence of an obstacle, for example as a detection assay is being set up or during the assay. A non-vertical and non-horizontal sensing surface is therefore, when in combination with the feature of a transparent portion of the sensor unit, is a particularly preferred embodiment of the invention, as it is easier for the user to visually inspect the sensing surface orientated at such an angle without having to place him- or herself in an awkward physical position in order to view a vertically or horizontally orientated sensing surface.

In the second possible characterising feature (b) of certain embodiments of the invention, the channel has a cross-section with a vertical dimension that is larger at one position across the channel than at another, for example with a vertical dimension that is larger at approximately the middle than at the sides of the channel, and preferably where the channel has a vertical dimension that is substantially larger at approximately the middle than at the sides of the channel. The skilled person will recognise the meaning of the term "vertical dimension" when used in reference to the channel, and that it includes an internal dimension of the channel that is perpendicular to the sensor surface. In certain preferred embodiments, said channel has a house-shaped cross-section. It is surprisingly found that this second possible characterising feature (b) shows a reduced degree of bubble retention in a sensor unit, and in particular on the sensor region, compared to a conventional square or rectangular channel with a non-sloping roof. Without being bound by theory, it is believed that an angled roof shape provides a "locating groove" for any bubbles such that they are kept as far away from the sensor region as possible (without unnecessarily increasing the volume of the channel), and that they do not wander across the roof of the channel. Once in such a locating groove, the flow of sample-fluid provides a means to transport the bubble out of the sensor unit in a control manner, especially if the roof of the channel is constructed from a hydrophilic material that is less prone to a bubble form sticking.

The term "house-shaped" will be readily understood by the skilled person, and includes channel cross-sectional shapes that have approximately perpendicular side-walls (11 of FIGURE 1), preferably substantially perpendicular side-walls, in combination with a sloped roof (12). The sloped roof may comprise one or more straight slopes, examples of which are represented by the shapes depicted by FIGURE 1(a) to 1(h). In other certain embodiments, the sloped roof may comprise a curved slope or a combination of curved and straight slopes, examples of which are represented by the shapes depicted by FIGURE 1(a') to 1(h'). In all embodiments, the actual and relative heights of the side-walls and the channel at its highest point (as well as the width of the channel) will vary depending on the dimension of the sensor surface and other factors. For example, if a greater fluid volume or flow-rate is required, then the side-walls may be longer before the sloped portion of the channel commences, such that the sloped roof is now positioned generally further away from the sensor surface, such as with a 2 or 3 floored house. Equally, the magnitude of the slope that forms the sloped roof can vary. This may be reflected in steeper or shallower angles, smaller or larger angles of intersection between the side-walls and roof or between the portions of the roof itself, and in the case of curved sloping roofs, in larger or smaller curve-radii.

In certain embodiments, two faces of the channel may intersect to form a defined corner. Alternative embodiments include where such faces interact to form a curved corner. In particular embodiments, such curved corners are advantageous as they further limit the retention of obstacles, such as bubbles, in the corners of the channel. Curved corners may be formed deliberately, or may be a consequence of the channel forming process, such as machining or moundling. As will be recognised, in certain embodiments of the invention the channel is at least partially made from a deformable material. Accordingly, it will be appreciated by the skilled person that curved corners of the channel may arise from deformation of such materials.

The roof portion of the channel may comprise a single sloping section where one side-wall is longer, preferably substantially longer, than then other side-wall, such as indicated by FIGURES 1(g & g*'*) and 1 (h and h*'*)). Alternatively, the roof portion may have a ridge (13), for example at approximately the middle of the cross-section of the channel with two portions that slope down from said ridge one to each lower side wall. In particular such embodiments, the angle (θ₁) at the ridge found approximately at the middle of the channel is between about 120 and 175 degrees, preferably between about 150 and 165 degrees, such as about one hundred and sixty degrees (160°) degrees, and/or preferably where the overall height to the ridge is between 50 and 500 percent higher, preferably between about 100 and 400 percent higher, such as about three hundred percent (300%) higher, than the height of the side walls.

In yet other particular embodiments, the channel has a cross-section that is shaped generally as one selected from one represented in FIGURE 1, and most preferably where said channel has a cross-section that is shaped generally as one represented by FIGURE 1(b), in each case including embodiments where such cross-section has a shape substantially as a shape represented in FIGURE 1. In all shapes described and/or represented herein, it will be appreciated that a particular dimension, such as side-wall height or an angle, may be varied but such a shape would still be recognised by the skilled person as forming the same general impression as the original shape. Further, and as described above, because in certain embodiments of the invention the channel is at least partially made from a deformable material, the skilled person will appreciate that the exact and/or final cross-sectional shape of the channel may vary depending on the degree of pressure placed on the channel, such as in certain embodiments, before or after the side-walls of the channel are brought into contact with the sensing surface, for example as generally depicted in FIGURE 2(b).

In certain embodiments of the invention, the sensing surface may be orientated to have the sensor region either facing generally upwards or facing generally downwards, and at various non-vertical and non-horizontal angles. Accordingly, it also will be appreciated by the skilled person that the shapes described and/or represented herein (for example, those in Figure 1), and including the terms "higher", "taller", "roof", "side-wall" "larger", "longer" "vertical dimension" etc are relative to the position or orientation of the channel when in the sensor unit. Hence, all orientations of the shapes described and/or represented herein are encompassed by the instant invention.

When used herein in reference to a figure, an embodiment described as "generally" represented by said figure also encompasses embodiments that differ only in immaterial details from the specific embodiment shown in the applicable figure, and also encompasses embodiments that have the same character; in that such embodiment and such figure make the same overall impression on the skilled person.

In the third possible characterising feature (c) of certain embodiments of the invention, that portion of the sensor unit that covers said sensing surface is sufficiently transparent so as to visually detect an obstacle retained in the sensor unit and wherein the side-walls of said channel in contact with the sensing surface are constructed from a deformable material. Various possible kinds of obstacle are described herein, and may be a solid or semi-solid particle, such as dust, a cell or cell-clump, a fragment of fabrication material, or a fibre such as a hair or a fibre from a textile. An obstacle may be a precipitate, crystal or emulsion-based particle that arises out of the fluid itself. Alternatively, an obstacle may be a gas, particularly a bubble of air or another gas or vapour, or more generally a void formed from the absence of fluid. In preferred embodiments of the invention, the obstacle is a bubble. However, as will be apparent to the skilled person in light of this embodiment of the invention, a portion of the sensor unit that is sufficiently transparent to visualise a bubble will, equally, be sufficiently transparent to visualise many, if not all, other kinds of obstacles that may be present or likely to be present in the sensor unit. In certain such embodiments, said portion of the senor unit is sufficiently transparent so as to visually detect such an obstacle in the channel or on said sensing surface, preferably on said sensor region, during normal operation. The term "normal operation" will be understood by the skilled person, and includes the use of the sensor unit, or an apparatus including such sensor unit, without disturbance of the operation of said sensor unit or apparatus, such as by opening an operative cover or lid, to cause loss of sample-fluid or by switching off or dismantling the sensor unit or apparatus, or otherwise interrupting or disturbing the operation of said sensor unit or apparatus or of any detection assay being conducted therewith. The apparatus may include a non-operative cover or lid, for example one that has the primary objective to improve the overall aesthetics or design of the apparatus, and that has no material other functionality or technical purpose or advantage. Such a non-operative lid may also be sufficiently transparent to visually detect an obstacle retained in the sensor unit, but as it does not affect the normal operation of the apparatus, may also be opaque.

As will be appreciated by the skilled person, it is not required that the portion of the sensor unit that covers the sensing surface is as transparent as high-quality glass in order to visually detect the obstacle. It merely has to transmit enough light such that the user can recognise if an obstacle is present. For example, coloured, but otherwise transparent, materials (or slightly cloudy) can be "sufficiently" transparent, and in particular non-opaque silicone-rubber material. As will be known to the skilled person, silicone-rubber can be formed for example using 2-part silicone elastomer kits obtainable from a variety of suppliers such as Dow Corning, Wacker Chemie or Quantum Silicones.

In yet other embodiments, as well as the side-walls in contact with the sensing surface, that portion of the channel that is opposite the sensing surface is also constructed from a deformable material. In certain preferred embodiments, said side-walls are additional constructed to include a stop-surface. The term "stop-surface" is intended to mean a region of the construction material that is set back from the base of said side-walls so as to provide a resistant portion that restricts the deformity of the chamber as it is pressed onto the sensing under normal conditions to make a fluid-tight seal. An example of a suitable stop-surface is described in WO 2009/153189, and in particular feature (22), used in combination with a lipped side wall (21), both shown in Figure 3 thereof. In the instant invention, a stop-surface is exemplified by feature (24) in FIGURE 2a, and this stop-surface provides a robust limit to the compression of the side walls as the channel is formed by sealing the side-walls (25), comprising a lip (26), made from deformable material onto the sensing surface (not shown).

Advantages achieved by this combination of transparent portion of sensor unit and deformable side-walls include that: first the obstacle can be more readily detected by the user, preferably before the assay itself has started, and hence reduce the waste of expensive or rare sample-fluid, sensing surfaces or reagents; and second that upon detection of an obstacle, the shape of the channel may be deformed, by the application of additional pressure, to seek to dislodge an obstacle, such a bubble, so detected. For example, if the user detects by visual detection that any bubble has been retained in the sensor unit, since the side-walls are made from a deformable material such as silicone-rubber, the user may simply press the top of the sensor unit with a force sufficient to deform the cross-sectional shape of the channel within the sensor unit. Without being bound by theory, it is believed that deformity in the shape of the channel causes a change in the flow dynamics in the channel by generating a higher lateral flow rate (ul/min/mm²) at the same flow rate (ul/min) which then causes the obstacle, such as a bubble, to be dislodged. The house-shaped cross-section is believed to be more readily deformed than the equivalent square or rectangular channel without risk of contact with the underlying sensor region (see FIGURE 2b). Once dislodged, particularly from the sensor region, the obstacle may then be carried away from the sensitive detection area by fluid flow or gravity, thereby providing a sensor unit or sensor region that is no-longer disturbed or perturbed by the obstacle. Such adaptations to dislodge an obstacle hence provide sensor units of the invention having an additional reduced propensity to retain obstacles such as bubbles in the sensor unit or in the channel, and in particular on the surface of the sensor region.

As will be now obvious for the skilled person, an obstacle, such as a bubble, can be visually detected not only by the user directly by eye, but this detection may be facilitated through the use of optical enhancement adaptations, including a lens, magnifying glass, microscope or camera. In particular, through the use of a digital camera and imagine capture/analysis systems, an obstacle may be automatically detected by the system and the user alerted. Alternatively, the system may, upon detection of an obstacle, be programed to react appropriately such as to stop, to increase the fluid flow-rate, or to take other actions to seek to dislodge or remove the obstacle, such as to cause the channel cross-sectional shape to be deformed.

The sensor units of the invention include at least one of the three characterising features (a), (b) or (c) as described in more details above as alterative solutions to solve related or the same technical problem. Preferably the sensor units of the invention include characterising feature (b), and most preferably the sensor units of the invention include all these three characterising features (a), (b) and (c). However, as well as any particular combinations described herein, characterising feature (a), (b) or (c), or specific embodiments thereof, may be combined with other features in any appropriate aspects of the invention.

In one particular such combination: (i) said channel has a vertical dimension that is larger at one position across the channel than at another; and (ii) at the side-walls of said channel in contact with, or to become in contact with, the sensing surface are constructed from a deformable material.

In another particular such combination: (i) said channel has a vertical dimension that is larger at one position across the channel than at another; and (ii) the sensor unit, when mounted for operation, is orientated at an angle between, but not equal to, horizontal and vertical, and with one fluid port located above the other fluid port.

In yet another particular such combination: (i) the sensor unit, when mounted for operation, is orientated at an angle between, but not equal to, horizontal and vertical, and with one fluid port located above the other fluid port; and (ii) that portion of the sensor unit that covers the sensing surface is sufficiently transparent so as to visually detect an obstacle retained in the sensor unit during normal operation.

In a particularly preferred such combination: (i) said channel has a vertical dimension that is larger at one position across the channel than at another; (ii) the sensor unit, when mounted for operation, is orientated at an angle between, but not equal to, horizontal and vertical, and with one fluid port located above the other fluid port; and (iii) that portion of the sensor unit that covers the sensing surface is sufficiently transparent so as to visually detect an obstacle retained in the sensor unit during normal operation, and optionally wherein the side-walls of said channel in contact with, or become in contact with, the sensing surface are constructed from a deformable material.

In all of the above combinations, as will be evident to the skilled person, particular embodiments described herein for specific features in each combination can be combined with other particular embodiments of the features in the combination and so form particularly advantageous or preferred combinations of particular embodiments.

In particular embodiments of the invention, the propensity for an obstacle, such as a bubble, to be retained in the sensor unit, such as in said channel or on said sensing surface, preferably on said sensor region, is reduced and/or wherein, said sensor unit is adapted to enable an obstacle, such as a bubble, to be dislodged from within the sensor unit, such as in said channel or on said sensing surface, preferably on said sensor region.

In certain embodiments of the invention, said channel has a meander shape, preferably where said channel includes a number of loops selected from the group of: between 2 and 50 loops, preferably about 12, 24 or 48 loops; between 2 and 10 loops; between 3 and 8 loops; and between 4 and 7 loops, most preferably 6 loops. This meander structure can further significantly reduce the propensity for an obstacle, such as a bubble, to be retained in the sensor unit. An example of a channel with a meander shape and with six loops in shown in FIGURE 2a.

In further embodiments of the invention, at least one side of said channel is constructed from a material selected from the group of: silicone-rubber; EPDM-rubber; a hard plastic material, such as PMMA; and a hydrophilic material. Preferably, the side-walls in contact with, or to become in contact with, the sensing surface are made from a deformable material, for example one that is also transparent, such as silicone-rubber as may be formed from 2-part silicone elastomer kits.

In more embodiments of the invention, the sensor region is comprised in a sensor selected from the group: a quartz crystal microbalance (QCM) sensor; a surface plasmon resonance (SPR) sensor; an electrochemical sensor; an optical sensor, such as a fluorescence sensor; and, preferably, a surface acoustic wave (SAW) sensor. Suitable SAW sensor regions and sensing surfaces include those described in WO2009/156265 and EP1577667, including the references specifically described therein.

It is observed that as the complexity of a sensor unit increases, or its dimension decrease, the propensity for obstacles such as bubbles to cause detrimental effects on the performance of the sensor unit and/or to the detection assay it is supposed to conduct, also increases; often to a degree that precludes the development, implementation or utility of more complex or smaller sensor units. Accordingly, the invention is, in particular, useful when applied to complex or reduced-scale sensor units. Such sensor units can be characterised wherein:

(a) The sensing surface comprises a number of sensor regions selected from the group of: two; three; four; five; six; seven; eight; nine; ten; between, 4 and 14; between 10 and 15, preferably 12; between about 15 and 25, preferably about 24; between about 25 and 50, preferably about 48; and between about 50 and 100, preferably about 96; and/or:

(b) The dimensions of said sensor unit are further characterised by at least one of: (i) the sensing surface having an overall surface area selected from the group of about: 10 cm²; 7.5 cm²; 5 cm²; 3 cm² ; 2.5 cm²; 2 cm²; 1 cm²; 0.5 cm² 0.25 cm²; 0.125 cm²; and, preferably, about 2.7 cm²; (ii) the sensor region having an overall surface area selected from the group of about: 20 mm²; 10mm²; 7.5 mm²; 7 mm²; 6 mm²; 5 mm²; 2.5 mm²; 2 mm²; 1 mm²; and, preferably, about 6.8 mm²; (iii) the channel having a width selected from the group of about: 10 mm; 7.5 mm; 5 mm; 2.5 mm; 2 mm; 1.5 mm; 1 mm; 0.5 mm; 0.25 mm; and, preferably, about 2.1 mm, and optionally where said channel has an aspect ratio of width to vertical dimension at approximately the middle of the channel, that is selected from the group of about: 2:1; 5:1; 7.5:1; 10:1; 15:1; 20:1; and, preferably, about 10.5:1; (iv) the channel having a cross-sectional area selected from the group of about: 5 mm²; 2.5 mm²; 1 mm²; 0.5 mm²; 0.25 mm²; 0.2 mm²; and, preferably, about 0.42 mm²; and/or (v) the channel having a total volume over said sensor region selected from the group of about: 10 ml; 5 ml; 2.5 ml; 2 ml; 1.5 ml; 1 ml; 0.5 ml; and, preferably, about 1.7 ml.

The sensor region in the various aspects of the invention is adapted to detect the presence of at least one analyte in a sample-fluid. On binding the analyte, the properties of the sensor region change in a detectable way. For example, on binding to a SAW sensor, the wave-propagation properties of the sensing surface are modified and these can be detected by appropriate electronic circuits such as described in EP1577667. For example, the sensor region may be of the layered type where a biological sensitive layer is located on the surface. A gold film or silicon dioxide layer may be deposited on the surface. For example, gold interacts with high affinity to proteins. However, this layer can then be further modified, for example modified to bind specific antibodies for antigen detection, either by the user or by the manufacturer of the sensor region, to enable said surface to be more specifically adapted to bind specific analytes or to bind analytes more effectively. Accordingly, in certain embodiments of the invention, the sensor region has detection moieties bound to it; preferably wherein said detection moieties are selected from the group of: antibodies; nucleic acids, such as DNA, RNA, or PNA; proteins; peptides; aptamers; cells; charged molecules; membranes; vesicles; chemical or electrochemical receptors; and, most preferably, monoclonal antibodies. Methods to adapt a sensor region, and to bind such detection moieties are well known in the art to the skilled person and include those described by Gronewold ("Aptamers and Biosensors", in "Nucleic Acid and Peptide Aptamer", Ed Mayer, Humana Press, New York).

In particular embodiments, the sensor unit of the invention can comprise at least two operative subunits: (i) a first operative subunit that includes said sensing surface; and (ii) a second operative subunit that includes at least two side walls and a face of said channel; and wherein said sensor unit is formed from said first and second operative subunits, by use of a locating means, preferable an operative lid or cover of an apparatus. Said locating means functions to position and create appropriate pressure between the first and second operative subunits such that a fluid-tight seal is formed between said sensing surface and said side walls, and that the channel of said sensor unit is formed; and preferably wherein said second operative subunit has a stop surface. Such a sensor unit has the advantage that particular sub-units or components of the sensor unit may be exchanged or reused, as appropriate, without having to replace the complete senor unit. For example, the sensing surface may be simply exchanged at the end of a detection assay, while reusing the other components of the sensor unit, thus saving expense, and environmental waste. Another component of the sensor unit that may become damaged exhausted or otherwise in need of exchange is that component or subunit that forms the side-walls of the channel.

Accordingly, another aspect of the invention relates to a novel intermediary subunit of the inventive sensor units, namely the **second operative subunit unit as** described in the preceding paragraph, which may optionally further include specific embodiments of the various features described therein, including where said second operative subunit unit includes a channel with a cross-section with a vertical dimension that is larger at one position across the channel than at another. Preferably said second operative subunit is generally as represented by FIGURE 3(b).

In another aspect, the invention is directed to a novel component of the inventive sensor units, namely **a fluid flow-cell** for a sensor unit of the invention wherein said fluid flow-cell comprises at least two side walls, and optionally said walls have an extended sealing lip, and a face adapted to form at least one channel to transport liquid fluid over at least one sensor region, characterised by when formed, said channel has a cross section that has a vertical dimension that is larger at approximately the middle than at the sides of the channel; preferably a vertical dimension that is substantially larger at approximately the middle than at the sides of the channel, such as wherein said channel, when formed, has a house-shape or a shape generally as one selected from one represented in FIGURE 1, and most preferably where said channel, when formed, has a cross section shape generally as one represented by FIGURE 1(b).

In particular embodiments, said fluid flow-cell is comprised within a second operative subunit as described above.

In further particular embodiments, said fluid cell is comprised on a second operative subunit, wherein said second operative subunit:

(a) Is sufficiently transparent to visually detect any bubbles retained in said sensor unit or channel or on said surface, preferably on said sensor region, during normal operation of said sensor unit; and/or

(b) Comprises at least one fluid-line, preferably two fluid-lines, to carry liquid to or from a fluid-port.

In preferred such embodiments, said fluid cell comprised within said second operative unit is generally as represented by FIGURE 3(b), and preferably is substantially as represented by FIGURE 3(b).

Yet another aspect of the invention relates to **an apparatus** for detecting the presence of at least one analyte in a sample-fluid, said apparatus characterised by comprising at least one sensor unit of the invention, and further comprising at least one (or all) of:

(a) Electronic control means, preferably comprising a high-frequency signal generator;

(b) Sampling means to sample a liquid from at least one sample container, or to introduce at least one liquid sample into said sensor unit, preferably an autosampler and a syringe-pump; and/or

(c) A computer readable medium including computer software adapted to control said apparatus.

The computer readable medium may comprise an external computer, such as a PC, an EPROM chip within the apparatus itself and/or a programmable logic controller (PLC). It may also be a computer-adapted storage medium such as a computer disk, USB stick or RAM memory. Software or other computer-operable-code may be stored or otherwise included in or on any of such memory devices or medium, for example computer software that is adapted to control one or more, or the entire, operative action of said apparatus.

In certain embodiments, said apparatus further comprises locating means, preferable an operative lid or cover of the apparatus, that functions to position and create appropriate pressure between the sensing surface and the side-walls of the channel of said sensor unit, such that a fluid-tight seal is formed between said surface and side-walls. In preferred such embodiments, the apparatus further comprises sensing means to sense if the locating means has correctly positioned, and/or created appropriate pressure between, said sensing surface and side-walls. Suitable sensing means include a micro switch or a pressure sensor.

In further embodiments, the apparatus of the invention may comprising means, such as a window or opening, that permits:

(a) Visual detection of any bubbles retained in the sensor unit or channel or on the sensing surface, preferably on the sensor region, during normal operation of the apparatus, and/or

(b) Additional pressure to be applied, preferably by the user, to the sensor unit, preferably to that portion of the sensor unit that covers the sensing surface, so as to deform the cross-sectional shape of said channel.

In a preferred such embodiment, such means is a window or opening that permits said visual detection during normal operation of the apparatus and other means that allows access to the sensor unit so that additional pressure may be applied thereto. The means that permits additional pressure to be applied to the sensor unit can include an uncovered opening, or a portion of the apparatus that may be moved such that the sensor unit is so exposed as to allow such pressure to be applied. Preferably, when said potion of the apparatus is moved it does not materially disrupt the operation of the sensor unit, such as not allowing sample-fluid to escape from the sensor unit or channel included therein.

In yet another embodiment, the apparatus of the invention comprises illuminating means, preferably at least one light or LED, to illuminate said sensor unit, channel, sensing surface or sensor region. Such illuminating means can be used to enhance the visual detection of obstacles.

The various characterising features of the invention, and combinations thereof, provide advantages, including the effect of reducing the retention of obstacles, such as bubbles, in a sensor unit. Accordingly, one more aspect of the invention relates to **a method** of reducing the retention of obstacles, such as bubbles, in a sensor unit, such as in a channel or on a sensing surface preferably on a sensor region of a sensor unit of the invention or the apparatus of the invention by dislodging an obstacle, such as a bubble, retained therein or thereon, wherein that portion of the sensor unit that covers the sensing surface is sufficiently transparent so as to visually detect any bubbles retained in said sensor unit or channel or on said sensing surface, preferably on said sensor region, during normal operation of said sensor unit or said apparatus, and wherein the side-walls of said channel in contact with the sensing surface are constructed from a deformable material, said method comprising the steps of:

(a) Providing said sensor unit or said apparatus and supplying it with a flowing sample-fluid, preferably a sample-liquid;

(b) Visually inspecting if any obstacle, such as a bubble, is retained in said sensor unit or channel or on said sensing surface, preferably on said sensor region; and

(c) Deforming the cross-sectional shape of the channel, preferably wherein said channel has a house-shaped cross-section, such that the retained obstacle is dislodged from said sensor unit or channel or from said sensing surface, preferably from said sensor region.

Preferably, as well as said side-walls, that portion of the channel that is opposite the sensing surface is also constructed from a deformable material.

Of particular significance of this method is that the obstacle is thereby removed without the disadvantages of needing to replace, shut down or otherwise dismantle a sensor unit, particularly without having to stop the ongoing detection assay, or for a sensor unit that may be expensive or complicated, may be incorporated in a complicated detection assay or may contain expensive, rare, important or precious sample fluid within it. Further, it will be apparent to the skilled person, that this method may be partially or fully automated, for example by the use of a computerised image detection and analysis system to detect obstacles, eg bubbles, and/or an automatically activated actuator means that is adapted to provide sufficient additional pressure to the sensor unit or fluid flow-cell such that the channel cross-sectional shape is deformed and hence any obstacle so detected is then dislodged. These steps, whether conducted manually or automatically, may be repeated more than once, such as between two and ten times, in order to dislodge more than one obstacle or to dislodge an obstacle that is particularly resistant to dislodging.

Senor units and apparatus of the inventions have particularly utility in the detection of analytes in a sample-fluid as they are less susceptible to retain obstacles such as bubbles, and hence are more robust and/or less susceptible to suffer losses in performance. Accordingly, a further aspect of the invention relates to a **use of a sensor unit** of the invention or **use of an apparatus** of the invention to detect the presence of at least one analyte in a sample-fluid, such as a sample-liquid.

Another further aspect of the invention relates to **computer software,** or a **computer readable medium** comprising such computer software, where said computer software is adapted to control a sensor unit of the invention or an apparatus of the invention. Since the computer software controls the operation or functioning of said sensor unit or apparatus, it produces a further technical effect beyond the normal physical interactions between computer program and computer.

In another certain aspect, the invention relates to an analogy **process for manufacturing** the fluid-flow-cell of the invention, said process **comprising the steps of:**

(a) Providing a mould that has a shape complementary to that of said fluid-flow-cell;

(b) Filling said mould with a liquid polymer capable of solidifying;

(c) Allowing or causing said liquid polymer to solidify; and

(d) Removing a manufactured fluid-flow-cell from said mould.

In a preferred embodiment of this process, the liquid polymer is a silicone polymer, such as obtainable from a 2-part silicone elastomer kit, and the fluid-flow-cell so produced is formed from silicone-rubber. While in another embodiment, the liquid polymer is a molten thermoplastic and/or the process comprises injection moulding.

In certain embodiments of said process, the mould includes an opening adapted to receive the remainder of that portion of the sensor unit that covers the sensing surface, and said process includes an additional intermediate step between (b) and (c) (or as said liquid polymer is only partially solidified) where said remaining portion is placed onto said solidifying polymer so as to form a fluid-flow-cell comprised on the second operative subunit of the invention.

In a particular embodiment of such process, said mould having a complementary shape is provided from a first mould having the shape of said fluid flow-cell, preferably by hot embossing of a rigid plastic using a first mould made from metal. The skilled person will now recognise that such an embodiment is an analogy process of the socalled "double-inverse method" of moulding.

It will be apparent to the skilled person, that the mould of the invention may be reused in this analogy process, particularly if it is made of a robust material such a metal. Also, a mould having multiple shapes complementary to that of a fluid-flow-cell of the invention, such as including between 2 and 50 such complementary shapes are envisioned by this aspect of the invention. By use of such a mould and/or by use of conventional automated moulding machines large quantities of fluid flow-cells of the invention may be manufactured.

In another certain aspect, the invention relates to **a mould** for use in manufacture, **characterised by** said mould having a shape: (i) complementary to; or (ii) identical to, that of the fluid-flow-cell of the invention. The mould having a shape complementary to said flow-cell can be used in a process to manufacture flow-cells of the invention, and the mould identical to said flow-cell can be used to produce a mould of complementary shape, which in turn can be used in a process to manufacture flow-cells of the invention.

In a further particular aspect, the invention relates the use of a fluid-flow-cell of the invention or the use of **a second operative unit of claim** of the invention to reduce the propensity for retention of obstacles, such as bubbles, in a sensor unit or channel or on a sensing surface, preferably on a sensor region, of a sensor unit. In one such embodiment, said flow-cell, fluid-flow-cell or second operative unit is used in a sensor unit or apparatus of the invention to dislodge an obstacle, eg a bubble, from within a sensor unit.

Finally, other inventions disclosed herein relate to **a sensor unit** comprising: (i) a sensing surface having at least one sensor region adapted to detect the presence of at least one analyte in a sample-fluid; (ii) at least one fluid-port for providing said sample-fluid, preferably a sample-liquid, to, and at least one fluid-port for removing said sample fluid from, said sensing surface; (iii) at least one channel to transport said sample-fluid from one fluid-port, across at least one sensor region, to another fluid-port; and (iv) said sensing surface when mounted for operation, is orientated horizontally or vertically, wherein said sensor unit is **characterised by:**

(a) Said channel has a cross-section with a vertical dimension that is larger at one position across the channel than at another; and/or

(b) That portion of the sensor unit that covers said sensing surface is sufficiently transparent so as to visually detect an obstacle retained in the sensor unit during normal operation, and wherein the side-walls of said channel in contact with the sensing surface are constructed from a deformable material.

### EXAMPLES

EXAMPLE 1: Detrimental effect of obstacles on performance of sensor units in detection assays. An experiment is conducted to demonstrate that the retention of obstacles, such as bubbles, within the sensor unit, and particularly on the sensor region has a detrimental effect on the performance of a SAW-based sensor unit in a detection assays. A SAW-based instrument as depicted in FIGURE 5(a) is used. This apparatus contains a sensor unit of the invention as generally depicted in FIGURE 3(c), held in an orientation as show in FIGURE 4(a) and which includes a fluid flow-cell as depicted in FIGURE 2(a). A typical detection experiment is prepared, generally as according to the method described in Perpeet et al (Analytical Letters, 39: 1747, 2006). This protocol uses anti-thrombin antibody moieties bound to the surface of each of the five SAW sensor regions and such a method can sensitively and accurately detect and quantify the presence of 40 nM thrombin in a sample liquid.

A fluid comprising a detectable amount of thrombin in a sample liquid is introduced into the instrument using an autosampler and syringe-pump according to standard procedures. After such introduction of the fluid and stability of the apparatus, the signal obtained from the five SAW senor regions is read out and shows reasonably uniform detection and/or quantification of the thrombin in the sample liquid across all five SAW sensor regions (see FIGURE 7(a) for the signal from one such senor region).

A series of bubbles are then introduced into the sample liquid using the syringe-pump, and the readout for the same SAW senor region then becomes substantially variable, unstable and unreliable (see FIGURE 7(b)), thus demonstrating the significant detrimental effects of bubbles on the performance of SAW sensor regions in detection assays. The experiment is repeated, but in this case to introduce into the sensor unit a sample fluid containing fine solid particles by using an aqueous suspension of melamine-resin micro particles or about 1 or 10 um (Sigma Aldrich) and fluid-port tubing of around 380 um internal diameter; and in this case analogously variable, unstable and unreliable readouts are also obtained from the SAW sensor regions.

EXAMPLE 2: Reduced retention of obstacles in sensor units of the invention. An experiment is conducted to demonstrate that the retention of obstacles, such as bubbles, can be reduced by using a sensor unit of the present invention. Accordingly, the SAW-based instrument and protocol as described in EXAMPLE 1 is used, but an experiment is designed to test the effect on bubble-retention of channel cross-sectional shape and the orientation of the sensing surface. The orientation of the sensing surface is considered "Sloped" as shown for the standard instrument in FIGURE 4(b), ie at an angle of approximately thirty degrees (30°) to horizontal. To orientate the sensing surface to "Horizontal" using the same apparatus, the instrument is tilted backwards and then supported by an appropriately sized block such that the sensing surface is now held approximately horizontally. The experiment is then repeated for these two orientations of the sensing surface but using a fluid flow-cell for the sensor unit that has a channel with a generally "Rectangular" cross-sectional shape. This modification is easily adapted by swapping the second operative subunit within the sensor unit of the instrument. This is compared to the "House-shaped" cross-section of the channel of a fluid flow-cell of the present invention (the cross section as represented by FIGURE 1(b) and the fluid flow-cell as depicted in FIGURE 2a).

The degree of bubble retention within the sensor unit is assessed under each condition, either by counting the number of bubbles visible, by the degree of variability, instability and unreliability of the readout from one or more of the five SAW sensor regions of the instrument, or the percentage of experimental runs that are affected by bubble retention or such degree of variability, instability and unreliability of the readout signal, such as shown in FIGURE 7(b). TABLE 1 shows that the degree of bubble retention in a sensor unit, and in particular on the sensor region, can be reduced by adaptation of a sensor unit to include either of, and preferably both, of two features of a sensor unit of the present invention: in this case a channel having a "House-shaped" cross-section and/or a "Sloped" orientation of the sensing surface. Similar results are observed when repeating the experiment with other fluid flow-cells including channels with other cross-section shapes of the invention.

**TABLE 1: Relative degree of retention of bubbles**

| | Orientation of sensing surface | |
|---|---|---|
| Channel cross-section | **Horizontal** | **Sloped** |
| **Rectangular** | High | Medium |
| **House-shaped** | Medium | Very low |

EXAMPLE 3: Method of dislodging retained obstacles in sensor units of the invention. In certain embodiments of the sensor units of the present invention, any retained obstacle, such as a bubble, can be more readily dislodged by a method that makes use of certain adaptations of such sensor units. Even though the combination of a "House-shaped" cross-section shape of the channel and a "Sloped" orientation of the sensing surface showed a surprising reduction in the degree of bubble retention, a bubble may still occasionally be retained in the sensor unit. Such an obstacle may then be dislodged by the use of a third alternative feature of a senor unit of the present invention: that portion of the sensor unit that covers the sensing surface which is sufficiently transparent so as to visually detect any obstacle retained in the sensor unit during normal operation, and wherein the side-walls of the channel in contact with the sensing surface are constructed from a deformable material.

Using the experimental set up described in EXAMPLE 2, the user inspects if any obstacle, in this case any bubble, has been retained in the sensor unit by looking through the opening of an apparatus of the invention and through the transparent second operative unit. Since, in this case, the fluid flow-cell is made from silicone-rubber, a deformable and transparent material, the user may simply press the top of the sensor unit with a force sufficient to deform the cross-sectional shape of the channel within the fluid flow-cell. Without being bound by theory, it is believed that deformity in the shape of the channel causes a change in the flow dynamics in the channel by generating a higher lateral flow rate (ul/min/mm²) at the same flow rate (ul/min) which then cause the obstacle, such as a bubble, to be dislodged. The house-shaped cross-section is believed to be more readily deformed than the equivalent rectangular channel without contacting the underlying sensor region. Once dislodged, particularly from the sensor region, the obstacle is then be carried away from the sensitive detection area by fluid flow or gravity, thereby providing a SAW sensor region that is no-longer disturbed or perturbed by the obstacle. By providing adaptations to dislodge an obstacle, such sensor units of the invention thus overall also demonstrate a reduced propensity to retain bubbles in the sensor unit or in the channel, and in particular on the surface of the sensor region.

EXAMPLE 4: Process to manufacture a fluid flow-cell of the invention. A metal mould, as depicted in FIGURE 6(a), is machined by standard CNC processes and is assembled ready for use. Using a 2-part silicone elastomer kit, a mixture of silicone-rubber base and curing agent is made according to the manufactures instructions and poured into the entry opening of the mould. After a period of time of approximately 48 h (or 1 h 30 min at 80°), the polymer is considered "cured" and the mould is dismantled. A fluid flow-cell manufactured by this inventive analogy method is then removed, and provides a fluid flow-cell of the invention that has a cross-section with a vertical dimension that is larger at approximately the middle than at the sides of the channel. As an additional feature, this particular fluid flow-cell is made from silicone-rubber, which is a deformable and transparent material.

## Claims

1. **A sensor unit** comprising:
(i) A sensing surface having at least one sensor region adapted to detect the presence of at least one analyte in a sample-liquid;
(ii) At least one fluid-ports for providing said sample-liquid to, and at least one fluid-port for removing said sample-liquid from, said sensing surface; and
(iii) At least one channel to transport said sample-liquid from one fluid-port, across at least one sensor region, to another fluid-port;
Wherein, said sensor unit is **characterised by**:
a. Said sensing surface, when mounted for operation, is orientated at an angle between, but not equal to, horizontal and vertical, including wherein said sensor region is facing generally upwards; preferably wherein said sensing surface, when mounted for operation, is orientated at an angle selected from the group of: between about 10 and about 80 degrees to horizontal; between about 15 and 60 degrees to horizontal; between about 20 and 40; and, most preferably, about 25, 30 or 35 degrees to horizontal; and with one fluid port located above the other fluid port; preferably wherein the fluid-port for providing said sample-fluid is located lower than the fluid-port for removing said sample-fluid from the sensing surface, such that the direction of flow of the sample-fluid is generally upwards;
b. Said channel has a cross-section with a vertical dimension that is larger at one position across the channel than at another; preferably a vertical dimension that is larger at approximately the middle than at the sides of the channel, such as wherein said channel has a house-shaped cross-section or one that is shaped generally as one selected from one represented in FIGURE 1, and most preferably where said channel has a cross section shape generally as one represented by FIGURE 1(b); and/or
c. That portion of the sensor unit that covers said sensing surface is sufficiently transparent so as to visually detect a bubble retained in the sensor, such as in said channel or on said sensing surface, preferably on said sensor region, during normal operation; and wherein the side-walls of said channel in contact with the sensing surface are constructed from a deformable material, and optionally constructed with a stop-surface; preferably wherein the side-walls of said channel in contact with the sensing surface and that portion of the channel that is opposite the sensing surface are constructed from a deformable material.

2. The sensor unit of claim 1, wherein: (i) said channel has a vertical dimension that is larger at one position across the channel than at another; (ii) the sensor unit, when mounted for operation, is orientated at an angle between, but not equal to, horizontal and vertical; and with one fluid port located above the other fluid port; and (iii) that portion of the sensor unit that covers the sensing surface is sufficiently transparent so as to visually detect a bubble retained in the sensor unit during normal operation, and optionally wherein the side-walls of said channel in contact with, or become in contact with, said sensing surface are constructed from a deformable material.

3. The sensor unit of claim 1 or 2, wherein the propensity for a bubble to be retained in the sensor unit, such as in said channel or on said sensing surface, preferably on said sensor region, is reduced and/or wherein, said sensor unit is adapted to enable a bubble to be dislodged from within the sensor unit, such as in said channel or on said sensing surface, preferably on said sensor region.

4. The sensor unit of any one of claims 1 to 3, wherein said channel has a meander shape, preferably where said channel includes a number of loops selected from the group of: between 2 and 50 loops, preferably about 12, 24 or 48 loops; between 2 and 10 loops; between 3 and 8 loops; and between 4 and 7 loops, most preferably 6 loops.

5. The sensor unit of any one of claims 1 to 4, wherein at least one side of said channel is constructed from a material selected from the group of: silicone-rubber; EPDM-rubber; a hard plastic material, such as PMMA; and a hydrophilic material; and preferably where the side-walls in contact with, and that portion of the channel opposite, said sensing surface are made from a deformable and transparent material such as silicon-rubber.

6. The sensor unit of any one of claims 1 to 5, wherein the sensor region is comprised in a sensor selected from the group: a QCM sensor; an SPR sensor; an electrochemical sensor; an optical sensor, such as a fluorescence sensor; and, preferably, a SAW sensor.

7. The sensor unit of any one of claims 1 to 6, wherein:
a. The sensing surface comprises a number of sensor regions selected from the group of: two; three; four; five; six; seven; eight; nine; ten; between, 4 and 14; between 10 and 15, preferably 12; between about 15 and 25, preferably about 24; between about 25 and 50, preferably about 48; and between about 50 and 100, preferably about 96; and/or
b. The dimensions of said sensor unit are further **characterised by** at least one of:
i. The sensing surface having an overall surface area selected from the group of about: 10 cm²; 7.5 cm²; 5 cm²; 3 cm²; 2.5 cm²; 2 cm²; 1 cm²; 0.5 cm² 0.25 cm²; 0.125 cm²; and, preferably, about 2.7 cm².
ii. The sensor region having an overall surface area selected from the group of about: 20 mm²; 10mm²; 7.5 mm²; 7 mm²; 6 mm²; 5 mm²; 2.5 mm²; 2 mm²; 1 mm²; and, preferably, about 6.8 mm².
iii. The width of the channel being selected from the group of about: 10 mm; 7.5 mm; 5 mm; 2.5 mm; 2 mm; 1 mm; 0.5 mm; 0.25 mm; and, preferably, about 2.1 mm, and optionally where said channel has an aspect ratio of width to vertical dimension at approximately the middle of the channel, that is selected from the group of about: 2:1; 5:1; 7.5:1; 10:1; 15:1; 20:1; and, preferably, about 10.5:1;
iv. The cross-sectional area of the channel being selected from the group of about: 5 mm²; 2.5 mm²; 1 mm²; 0.5 mm²; 0.25 mm²; 0.2 mm²; and, preferably, about 0.42 mm²; and/or
v. The total volume of the channel over said sensor region is selected from the group of about: 10 ul; 5 ul; 2.5 ul; 1.5 ul; 2 ul; 1 ul; 0.5 ul; and, preferably, about 1.7 ul.

8. The sensor unit of any one of claims 1 to 7, wherein the sensor region has detection moieties bound to it; preferably wherein said detection moieties are selected from the group of: antibodies; nucleic acids, such as DNA, RNA, or PNA; proteins; peptides; aptamers; cells; charged molecules; membranes; vesicles; chemical or electrochemical receptors; and, most preferably, monoclonal antibodies.

9. The sensor unit of any one of claims 1 to 8, wherein said sensor unit comprises at least two operative subunits: (i) a first operative subunit that includes said sensing surface; and (ii) a second operative subunit that includes at least two side walls and a face of said channel, and wherein said sensor unit is formed from said first and second operative subunits, by use of a locating means, preferable an operative lid or cover of an apparatus, said locating means functioning to position and create appropriate pressure between the first and second operative subunits such that a fluid-tight seal is formed between said sensing surface and said side walls, such that the channel of said sensor unit is formed; and preferably wherein said second operative subunits has a stop surface.

10. **A second operative subunit unit as** recited in claim 9, preferably where said second operative subunit is generally as represented by FIGURE 3(b).

11. **An apparatus** for detecting the presence of at least one analyte in a sample-liquid, said apparatus **characterised by** comprising at least one sensor unit of any one of claims 1 to 9, and further comprising at least one of:
a. Electronic control means, preferably comprising a high-frequency signal generator;
b. Means to sample a liquid from at least one sample container, or to introduce at least one liquid sample into said sensor unit, preferably an autosampler and a syringe-pump; and/or
c. A computer readable medium including computer software adapted to control said apparatus.

12. The apparatus of claim 11, further comprising locating means, preferable an operative lid or cover of the apparatus, that functions to position and create appropriate pressure between the sensing surface and the side-walls of the channel of said sensor unit, such that a fluid-tight seal is formed between said surface and side-walls, and optionally wherein said apparatus further comprises sensing means to sense if the locating means has correctly positioned, and/or created appropriate pressure between, said sensing surface and side-walls.

13. The apparatus of claim 11 or 12, further comprising means, such as a window or opening, that permits:
a. Visual detection of any bubbles retained in the sensor unit or channel or on the sensing surface, preferably on the sensor region, during normal operation of the apparatus, and optionally further comprising illuminating means, preferably at least one light or LED, to illuminate said sensor unit, channel, sensing surface or sensor region; and/or
b. Additional pressure to be applied, preferably by the user, to the sensor unit, preferably to that portion of the sensor unit that covers the sensing surface, so as to deform the cross-sectional shape of said channel.

14. **A method** of reducing the retention of bubbles in a sensor unit, such as in a channel or on a sensing surface preferably on a sensor region of the sensor unit of any one of claims 1 to 9 or the apparatus of any one of claims 11 to 13, by dislodging a bubble retained therein or thereon, wherein that portion of the sensor unit that covers the sensing surface is sufficiently transparent so as to visually detect any bubbles retained in said sensor unit or channel or on said sensing surface, preferably on said sensor region, during normal operation of said sensor unit or said apparatus, and wherein the side-walls of said channel in contact with said sensing surface are constructed from a deformable material, preferably wherein the side-walls of said channel in contact with said sensing surface and that portion of the channel that is opposite the sensing surface is constructed from a deformable material, said method **comprising the steps of:**
a. Providing said sensor unit or said apparatus and supplying it with a flowing sample-liquid;
b. Visually inspecting if any bubble is retained in said sensor unit or channel or on said sensing surface, preferably on said sensor region; and
c. Deforming the cross-sectional shape of the channel, preferably wherein said channel has a house-shaped cross-section, such that the retained bubble is dislodged from said sensor unit or channel or from said sensing surface, preferably from said sensor region.

15. **Use of the sensor unit** of any one of claims 1 to 10, **or the apparatus** of any one of claims 11 to 13, to detect the presence of at least one analyte in a sample-liquid.
